# EUROPEAN PATENT APPLICATION

(11) **EP 0 916 932 A1**
(43) Date of publication of application: **19.05.1999**
(21) Application number: 97119652.2
(22) Date of filing: 10.11.1997
(51) Int. Cl.: G01G 17/06

(54) **Apparatus and method for replenishing containers in a storage rack**

(71) Applicant: Bossard AG, 6305 Zug (CH)
(72) Inventor: Henderson, Irving D. Muncy, 6312 Steinhausen (CH); Grob, Beat J., 6300 Zug (CH)
(74) Representative: Blum, Rudolf Emil Ernst

(57) **Abstract**

A storage consisting of one or more racks (1) is equipped with an automated replenishing system. For this purpose, the containers (3) in the rack (1) are equipped with weight sensors (4). When a weight sensors (4) indicates that the corresponding container (3) is nearly empty, an order for replenishing the container (3) is issued automatically. Preferably, the weight of each container (3) is extrapolated using the present rate of use. The system provides a continuous and economical operation of the storage.

## Description

The invention relates to a method for the determination of the need for replenishing containers in a storage and a storage comprising a plurality of containers according to the preamble of the independent claims.

Such kind of equipment is used for storing small articles, such as screws, nuts, bolts, electrical components, fasteners or pills or for storing different liquids. Usually, each container of the storage holds one type of article or liquid. During normal operation the containers are slowly being emptied. For instance, screws and nuts are being removed from the bins of the storage for assembling devices in a factory. As soon as a container is empty, it has to be refilled, e.g. by replenishing it from a central store or by reordering articles from an external supplier.

Monitoring the containers for the need of replenishing is a time consuming and costly task. If it is not carried out with care, an empty container may e.g. interrupt the operation of a whole assembly line. Depending on the rate of inspection of the containers, a large inventory of articles may have to be stored on-site to avoid shortages.

Hence, it is an object of the present invention to provide a method and a storage of the type mentioned above that allows a secure and timely but economical replenishing of the containers.

This object is reached by the method and storage described in the independent claims.

By measuring the weight of the contents of the containers, or at least of a parameter derived from this weight, it can be determined automatically when a container needs to be refilled.

Preferably, the time dependence of the parameter is determined, e.g. by calculating the rate of weight decrease. This information can be used for extrapolating the parameter and predict the time when replenishing is required. Hence, it is possible to order a replenishment in advance such that it arrives just in time for refilling the near empty container.

Further preferred embodiments of the invention as well as applications thereof can be found in the dependent claims and in the following description and figures, wherein:
Fig. 1 shows an embodiment of the invention comprising a rack with several containers, and
Fig. 2 is a block diagram of a system operating in accordance to the invention.

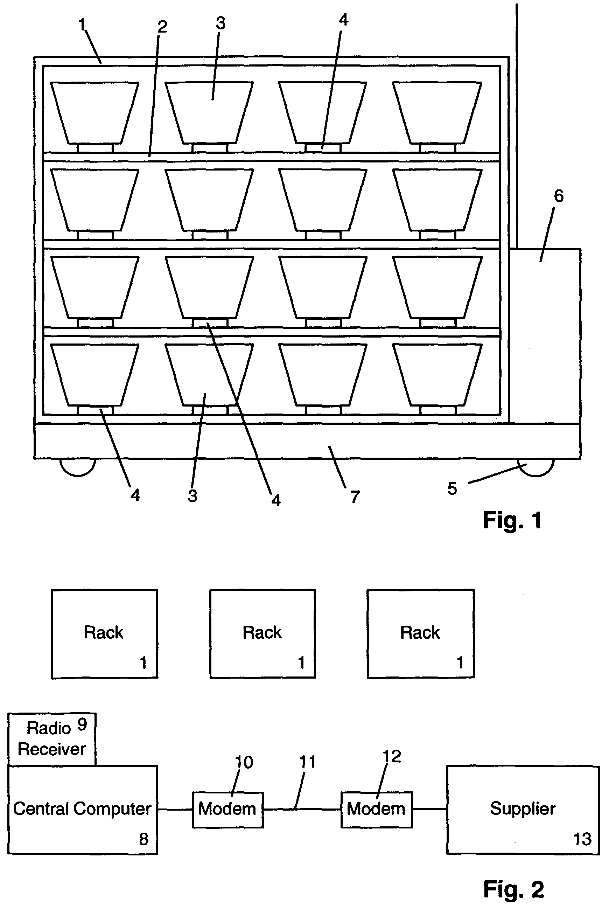

A preferred embodiment of the invention is shown in Figs. 1 and 2. It comprises a plurality of racks 1, such as the one shown in Fig. 1. Each rack 1 contains a plurality of shelves 2 and carries a large number of individual containers (bins) 3. Rack 1 is mounted on a carriage 7 with wheels 5, such that it can e.g. be stationed in any suitable place of a factory.

Each container 3 holds a stock of small items, such as screws, bolts, nuts, fasteners, pills, transistors, etc. These items are continually removed during normal use of the storage rack, e.g. for assembling or packaging.

As can be seen from Fig. 1, each container 3 is mounted on a weight sensor 4. These sensors can e.g. be based on conventional strain gauges or capacitive deformation detectors. In the present embodiment, the weight sensors measure the gross weight of each container, i.e. the weight of the container itself and of its contents.

In Fig. 1, the containers 3 are mounted on top of the weight sensors. Depending on the design and shape of the rack and the containers, other arrangements can be used. For example, the containers could be hanging between two horizontal rods, wherein the weight sensor would be arranged between one of the rods and the container.

The signals from the weight sensors 4 are transmitted to a radio emitter 6 mounted to rack 1. Radio emitter 6 sends the signals to a central computer 8 equipped with a suitable radio receiver 9 (see Fig. 2). Central computer 8 analyses the signals as described below for determining if a container needs replenishing. If this is the case, central computer 8 issues an order for the corresponding article, which is transmitted via modem 10 of central computer 8, the public phone net 11 to a modem 12 of a supplier 13. Supplier 13 then delivers the appropriate articles to the site of racks 1.

Central computer 8 can use various methods for determining the time for reordering articles.

In a simple embodiment, the weight wᵢ of each container 3 (where i stands for the container index) is compared with a threshold value w_{th,i} for the container. The threshold value w_{th,i} is predefined for each container and depends on the weight of the articles stored in the container and the size of the container, the expected usage rate and the delivery time for replenishments. For instance, the value is set to the gross weight the container has when it is filled to 10%. Once central computer 8 finds that the weight of the container falls below the threshold value, an order for replenishment is issued.

It must be noted that in order to carry out this simple embodiment of the invention, it is not required that the sensors 4 provide signals indicative of the absolute weight of the containers 3. Alternatively, sensors 4 could deliver digital signals that are e.g. 0 if the weight of the container is above its threshold value and 1 if it is below it. Sensors of this type can be of a simple design and e.g. consist of a spring mounted support for the container and a switch actuated if the weight of the container 3 is sufficient to push said support to a predefined position.

In a preferred embodiment, the gross weight of the containers 3 is monitored as a function of time. For each container 3, central computer 8 stores the gross weight wᵢ(t₁) at time t₁. At a later time t₂, the weight wᵢ(t₂) is measured again and the rate of weight decrease is determined from (wᵢ(t₂) - wᵢ(t₁)) / (t₂ - t₁). This rate is used for an extrapolation of wᵢ to predict the time tₜₕ when wᵢ(tₜₕ) reaches the threshold value w_{th,i} for this container. (This threshold value can be a net weight of 0.) The order for replenishing the container is issued at a time t_{order} when tₜₕ draws near, i.e. the order is issued when tₜₕ - t_{order} falls below a given value tₒₜ. The order time tₒₜ is determined by the time it takes to deliver a replenishment from supplier 13 to the site of racks 1.

In a more elaborate method, the weight wᵢ(t) of each container is stored as a function of a larger number of time values and extrapolation is carried out by linear or non-linear regression or time series analysis.

As mentioned above, since each container 1 may contain different articles of different weights, a threshold value w_{th,i} for each container i must be stored in central computer 1. When the type of articles in a container is changed, the threshold value must be readjusted accordingly.

It must be noted that the invention can be carried out in various ways and is not limited to the embodiment shown in Figs. 1 and 2.

For instance, there is no need to equip all containers 3 of rack 1 with weight sensors. Some conventional bins can be provided for holding articles that are not monitored automatically.

Rack 1 can also be stationary, depending on how it is to be used. In this case, radio emitter 6 and radio receiver 9 can be dispensed with and permanent transmission cables can be located between rack 1 and central computer 8.

Also, at least part of the functions of central computer 8 could be located in the rack 1 such that rack 1 determines itself if one of its containers needs replenishing and only then contacts central computer 8. Alternatively, part of the functions of central computer 8 could be located at the site of supplier 13.

The present invention is suited for any types of articles that can be stored in a container (or, equivalently, on a roll or tablet) and that is being used up or consumed gradually. In particular, the system can e. g. be applied to a storage of liquid or granular goods.

## Claims

1. A method for the determination of the need for replenishing containers in a storage, wherein said storage comprises a plurality of containers (3), characterized by the step of measuring, for each of said containers (3), a parameter (wᵢ) depending on the weight of the contents of the container and determining from said parameter (wᵢ) the need for replenishing the container.

2. The method of claim 1 wherein said parameter (wᵢ) is the gross or net weight of each container.

3. The method of one of the preceding claims, comprising the steps of measuring a time dependence of said parameter (wᵢ) and extrapolating said parameter.

4. The method of claims 2 and 3 comprising the step of determining the rate of decrease of said gross or net weight and using said rate for extrapolating said weight.

5. The method of claims 3 or 4 comprising the step of predicting a limit-time (tₜₕ) at which said parameter reaches a given limit and flagging a need for replenishing if said limit-time is closer than a given order-time (tₒₜ) from the present.

6. The method of one of the preceding claims, comprising the step of automatically ordering replenishments for containers in need of replenishing.

7. A storage comprising a plurality of containers (4) characterized by weighing means (4) for generating, for at least a plurality of said containers (4), a measuring signal depending on the weight of the container, and further comprising a monitoring means (8) for determining from said measuring signals the need for replenishing the containers (4).

8. The storage of claim 7 comprising weight sensors for said plurality of said containers (3).

9. The storage of one of the claims 7 or 8 comprising at least one rack (1), wherein each rack comprises several of said containers (4) and a wireless data emitter (6) for sending said measuring signals to a central computer unit (8).

10. The storage of claim 9 wherein said rack is mounted on a vehicle (7).
